# EUROPEAN PATENT SPECIFICATION

(11) **EP 2 529 940 B1**
(45) Date of publication and mention of the grant of the patent: **22.05.2013**
(21) Application number: 11168298.5
(22) Date of filing: 31.05.2011
(51) Int. Cl.: B41M 3/00, B42D 15/10, B44F 7/00, G02B 5/30, G02B 27/22, B42D 15/00, B41M 3/06

(54) **Printed device with three dimensional appearance**
Druckerzeugnis mit dreidimensionaler Erscheinung
Dispositif imprimé avec un aspect tridimensionnel

(43) Date of publication of application: 05.12.2012
(73) Proprietor: SICPA HOLDING SA, 1008 Prilly (CH)
(72) Inventor: Lefèbvre, Olivier, 1007 Lausanne (CH); Degott, Pierre, 1023 Crissier (CH); Demange, Raynald, 1442 Montagny-près-Yverdon (CH); Pietrolungo, Nicolas, 1615 Bossonnens (CH)
(74) Representative: Hepp, Dieter

(56) References cited:
- EP-A1- 1 628 147
- US-A- 5 398 131
- US-A- 5 457 554
- US-A1- 2004 058 132

## Description

### Introduction

The present invention relates generally to the field of devices useful as security element for the protection of banknotes and documents of value or articles and specifically to a device and a method for producing printed devices useful as security elements with three-dimensional appearance when viewed with an appropriate optical viewing equipment, such as eyeglasses with lenses acting as circularly polarizing filters. The printed device is formed with stereoscopic images of the object, the latter being composed of separate building blocks.

### State of the art

Three-dimensional representations of objects composed of images formed by pairs of stereoscopic projections are known in the art.

In US 5457554 and in US 5364557, S.M. Faris discloses a method for producing three-dimensional images made of ink layers comprising cholesteric liquid crystals materials, said ink layers reflecting right-handed (RHLC ink layer) or, respectively, left-handed (LHLC ink layer) circularly polarized light. In order to produce said three-dimensional images, LC ink layers of different primary colours are printed on top of each other.

In US 7041233, M Kuntz et al. describe a method for generating three-dimensional effect with 2 non-stereoscopic images formed with chiral liquid crystal (also called cholesteric liquid crystal) material. The liquid crystal layers are aligned by a thermal process or are used preferably in an encapsulated form. The three-dimensional effect produced by this technology can be seen from large distance such as at least 5 meters. The formation of different colour areas required the use of a mask during the LC curing process (e.g. example 1).

US-5398131 discloses a full color stereoscopic printing method for presenting an image of a stereo pair of images encoded to each eye of a viewer.

Industrial printing of devices useful as security elements with printing technologies such as silkscreen, flexogravure or rotogravure, must comply with some limitations that were not addressed by the above disclosed technologies for generating three-dimensional effects. For instance, with these printing technologies, 2 printing units are required to print the left-handed liquid crystal (LHLC) and the right-handed liquid crystal (RHLC) ink layers of a pair of stereoscopic projections; both printing units may print a LC ink layer of the same colour at a certain viewing angle, or the two printing units may print a pair of LC ink layers of different colour at the same viewing angle resulting in an additive colour for the 3-D image. The number of printing units available to print a device is generally restricted to 2 units or 4 units; hence the number of colours available to print a device with LC inks is very narrow.

3-D perception relies on many parameters that are simultaneously interpreted by the human brain. For real objects or real scenes, the human brain essentially uses the binocular disparity to extract 3-D perception of objects and focal depth information of a scene; the binocular disparity refers to the difference in retinal image location of an object seen by the left and the right eyes. For printed images, the most relevant clues of 3-D shapes are the texture gradient, shades, or the shadows; for scenes comprising a plurality of objects, the occlusion of one object by the other (i.e. one object is laid in front of the other and thus hides the underlying object) is an additional important clue of the spatial arrangement of the scene and of the 3-D shape of the objects.

When only a very limited number of mono-colour ink layers (e.g. one or two mono-colour ink layers) is available, the volume perception fades due to the reduction or disappearance of the 3-D clues such as shades; in the case of scenes comprising a plurality of objects printed with a mono-colour ink layer, the occlusion of one object by another one prevents the observer to have a clue of the relative distance of the different objects.

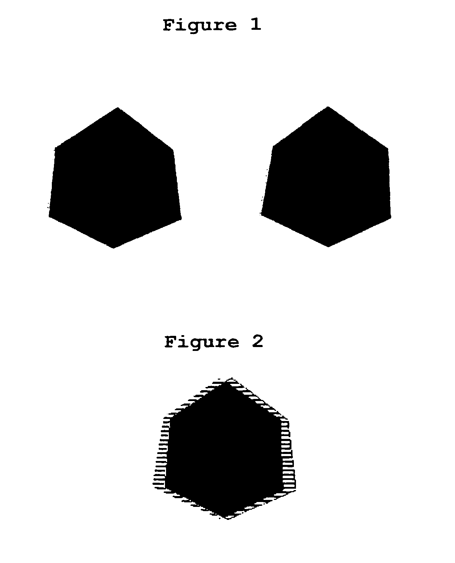

This effect is exemplified in **Figures 1 to 4** of the present application. **Figure 1** shows a pair of mono-colour stereoscopic projections of a non-subdivided object, a cube, formed by a mono-colour layer printed aside each other. **Figure 2** shows said pair of mono-colour stereoscopic projections of **Figure 1** printed in a partially superimposed location. The volume or 3-D shape of the cube cannot be recognized, even when printing the **Figure 1** or **Figure 2** with LHLC and RHLC ink layers and using appropriate circularly polarizing filters for observation, because the object lacks any clues from which the human brain could deduce a three-dimensional form of the cube.

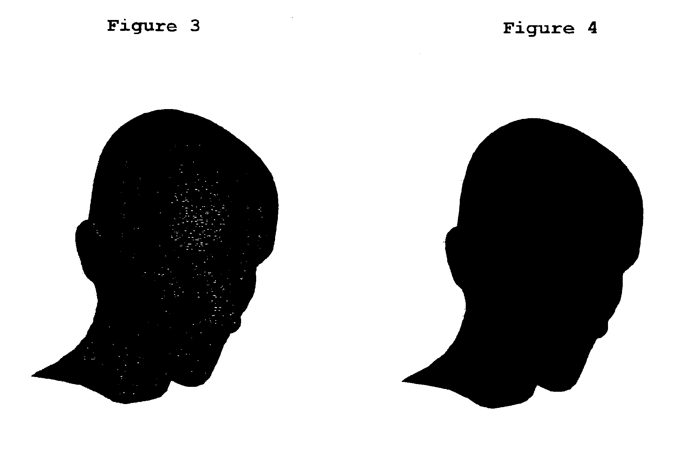

**Figure 3** and **Figure 4** illustrate the disappearance of the 3-D effect when using a mono-colour layer (**Figure 4**) instead of shadow nuances (**Figure 3**) for the formation of the object. While in **Figure 3** the details of the human head are apparent and the human brain is able to understand the object as being a three-dimensional image of a human head, the same is not possible with the image in **Figure 4****.** In **Figure 4****,** only the contours of the human head are perceivable. The observer's brain cannot interpret **Figure 4** as a three-dimensional image of a human head.

The specific restrictions imposed by industrial printing processes of devices useful as security elements make it impossible to generate three-dimensional effects by any of the above discussed prior art techniques.

Thus, there is still a need for a method for printing a device with a three-dimensional appearance with a very limited number of ink layers reflecting circularly polarized light (LC ink layers).

The disclosed technologies are silent about methods to produce devices with a three-dimensional appearance (3-D devices) useful as security elements, with only two mono-colour LC ink layers reflecting light of opposite polarization direction, or with a very restricted number of pairs of mono-colour LC ink layers reflecting light of opposite polarization direction. It was the task of the present invention to provide such a method and device.

### Summary of the invention

The present invention is related to a device comprising, on an underlying background, first and second ink layers which together represent a graphical object exhibiting, when observed with an appropriate viewing equipment, a three-dimensional appearance, wherein one of said ink layers shows a first colour at a certain viewing angle and is a left-handed circularly polarizing coating or comprises left-handed circularly polarizing pigment, and the other of said ink layers shows the same or another colour at said viewing angle and is a right-handed circularly polarizing coating or comprises right-handed circularly polarizing pigment, said first and second ink layers representing a first and a second image of a pair of stereoscopic projections of said graphical object, and said first and second ink layers being superimposed on each other, or being superimposable on each other, or being printed aside each other, characterized in that said graphical object is composed of separate building blocks, and that, within each of the stereoscopic projections, the building blocks forming the graphical object are represented such as to let the underlying background of said ink layers be apparent between the building blocks.

The present invention is furthermore related to a method for preparing a device as defined above, said method comprising the step of applying a first and a second ink composition to form a first and a second ink layer, wherein one of said ink compositions comprises left-handed circularly polarizing cholesteric liquid crystal pigments having a first colour at a certain viewing angle, and the other ink composition comprises right-handed circularly polarizing cholesteric liquid crystal pigments of the same or of another colour at said viewing angle, by a printing method, preferably selected from the group consisting of silkscreen printing, flexo printing, heliogravure or inkjet printing, most preferably by silkscreen printing, onto a substrate.

The present invention is furthermore related to a method for preparing a device as defined above, said method comprising the steps of
a) applying a first and a second ink composition onto a pre-patterned substrate by a printing method, preferably selected from the group consisting of silkscreen printing, flexo printing, heliogravure or inkjet printing, most preferably by silkscreen printing, to form a first and a second ink layer, wherein one of said ink compositions comprises a left-handed circularly polarizing cholesteric liquid crystal substance having a first colour at a certain viewing angle, and the other ink composition comprises a right-handed circularly polarizing cholesteric liquid crystal substance of the same or of another colour at said viewing angle;
b) aligning said layers comprising said cholesteric liquid crystal substances by interaction with the pre-patterned substrate; and
c) curing the layers applied and aligned in steps a) and b).

The present invention is furthermore related to a method for producing a device representing a graphical object exhibiting, when observed with an appropriate viewing equipment, a three-dimensional appearance, characterized by the steps of subdividing said graphical object into separate building blocks, and generating a first and a second stereoscopic projection of the subdivided graphical object onto the printing plane are generated.

The present invention is furthermore related to an authentication system, comprising a device as defined above and a viewing equipment, preferably eyeglasses comprising a left and a right circularly polarizing filter for the two lenses, each lens covering one eye of an observer wearing those glasses.

The present invention is furthermore related to the use of a device as defined above for the protection against counterfeiting of a commercial good or a security document selected from the group consisting of the banknotes, value documents or cards, transportation tickets or cards, tax banderols, and product labels.

The present invention discloses a method to print devices useful as security elements exhibiting, when observed with an appropriate viewing equipment, a three-dimensional effect, using a first ink comprising chiral liquid crystal pigments or substances, said pigments or substances reflecting left-handed circularly polarized light (LHLC ink layer) and a second ink comprising chiral liquid crystal pigments or substances, said pigments or substances reflecting right-handed circularly polarized light (RHLC ink layer). According to the method of the present invention, the three-dimensional effect can be produced with a very limited number of colours, preferably with LC pigments of up to two different colours at a certain viewing angle, most preferably with LC pigments of a single colour at a certain viewing angle.

According to the method of the present invention, the three-dimensional effect is produced by printing a pair of images, each image representing one of a pair of stereoscopic projections, of a graphical object composed of separate building blocks, said graphical object being a representation of a real or of a virtual object. The three-dimensional effect is observable when the observer uses an appropriate viewing equipment comprising a pair of circularly polarizing filters or lenses to observe the device of the present invention.

In a further embodiment, the present invention discloses a method for subdividing a graphical object into separate building blocks.

In a further embodiment, the present invention discloses a method for creating a pair of stereoscopic projections of a graphical object composed of separate building blocks and printing images representing said pair of stereoscopic projections on a substrate.

Subdividing the graphical object into a plurality of separate building blocks allows overcoming limitations inherent to the described security features, giving clues to the brain to understand the volume of the represented object or of the represented scene comprising a plurality of objects.

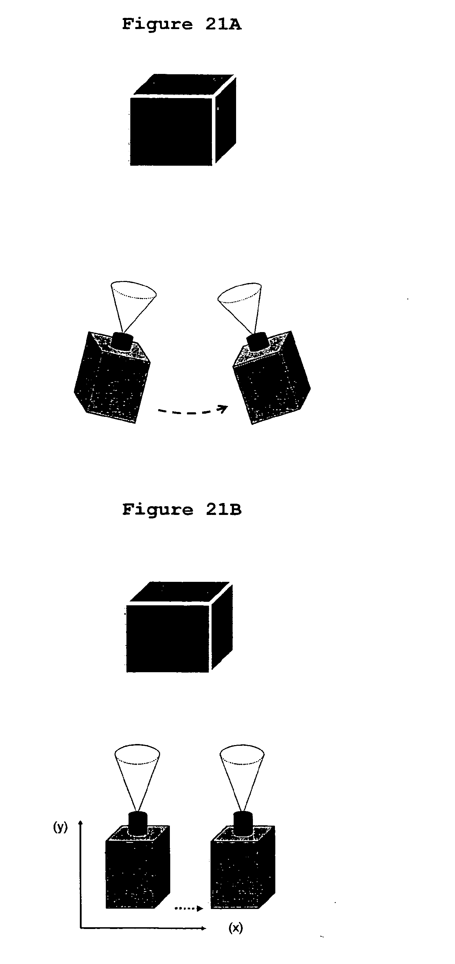

The generation of a 3-dimensional effect based upon the projection of two different perspective images being viewed with the left and the right eye of an observer is known in the art (e.g. US 5,457,554 or US 7,041,233). It is known in the art that a pair of stereoscopic projections may be created by capturing with a real camera or with a virtual camera, a pair of images of a real object or of a virtual object, said camera being moved along an axis at a constant distance from the object (**Figure 21a**); or alternatively said camera being moved along a path at right angle of the camera shooting direction (**Figure 21b**) (the shooting directions of the camera (axis y) towards the object or the scene at both positions are parallel to each other and are perpendicular to the moving path of the camera (x axis)). The pair of first and second stereoscopic projections is obtained by the projection on a plane of the pair of images captured by the camera.

In a preferred embodiment according to the present invention, the building blocks that belong to the back-side of the graphical object, relative to the observer's position and thus hidden to the observer from his viewing position, are removed. The removal of the hidden building blocks improves the 3-D effect by preventing any occlusion of building blocks. This removal of building blocks can be omitted if the sudivision of the graphical object into building blocks is performed by a direct application of an appropriate set of building blocks onto only the part of the surface of the graphical object which is seen by the observer from his viewing angle.

The first and the second LC image layers, corresponding to the first and the second stereoscopic projections, are printed on each other (superimposed LC image layers) or can be laid on each other (superimposable LC image layers) such as to partially overlap each other; or alternatively the first and the second LC image layers, corresponding to the first and the second stereoscopic projections, are printed aside each other apart from each other (not superimposed LC image layers).

When printed aside each other, the distance between the two LC ink layers may vary between zero (contiguous position; the two stereoscopic projections are joined to each other by one point or one side) and a few centimetres, preferably 0-5 cm, more preferably 0-3 cm and most preferably 0-1 cm (non-contiguous position). The two not superimposed LC image layers must be viewable simultaneously by the observer using the viewing equipment in order to view the object with a 3-D appearance. The 3-D effect of the device improves with a decreasing distance between the two stereoscopic projections. The best 3-D effect is obtained when the two stereoscopic projections are printed such as to partially overlap each other.

When the first and the second LC image layers corresponding to the first and the second stereoscopic projections are printed a few centimetres apart from each other, the 3-D appearance of the device is better perceived when the observer views the device from a distance, e.g. from an arm length or from a larger distance. For each device, there is an optimum observation distance in order to perceive the optimum 3-D effect; when the observation distance is shorter or larger than the optimum distance, the 3-D effect is still perceived but it may be less striking. The optimum observation distance depends on the overlapping degree of the LHLC and the RHLC image layers or on the distance between the LHLC and the RHLC image layers printed aside each other; the optimum observation distance also depends on the dimensions of the virtual triangle defined by the position of the graphical object and both camera positions when shooting the stereoscopic images.

For devices useful as security elements for security documents, banknotes or value goods, the first and the second LC image layers are most preferably printed such as to partially overlap each other. When the first and the second image layers are printed such as to partially overlap each other, curing of the first LC ink layer is required before applying the second LC ink layer.

The device is useful as a security element or as a security feature for the protection of banknotes, value documents, identity documents or, generally any article which requires authentication.

### Brief description of the drawings

**Figure 1** shows a pair of mono-colour stereoscopic projections of a cube not subdivided in separate building blocks (not part of the present invention).
**Figure 2** shows a pair of stereoscopic projections of **Figure 1****,** the projections being placed partially on each other (not part of the present invention).
**Figure 3** shows a picture of 3-D object (human head) comprising variation of colour lightness (shadow areas) (not part of the present invention).
**Figure 4** shows the picture of **Figure 3** represented with a mono-colour ink layer (not part of the present invention).
**Figure 5** shows a view of a device comprising a cube subdivided as shown in **Figure 6**, with the superposition of the two LC image layers consisting of the two stereoscopic projections. If the two LC image layers would be printed with a pair of LC ink layers on an absorbing underlying surface, an observer, using an **appropriate** pair of circularly polarizing filters would see a mono-colour cube with a 3-D volume.
**Figure 6** shows the pair of mono-colour stereoscopic projections of **Figure 1** of a cube subdivided in 3 separate building blocks.
**Figure 7** shows the graphical object of **Figure 3** subdivided in a plurality of mono-colour dots.
**Figure 8** shows a pair of stereoscopic projections of the subdivided object of **Figure 7****.**
**Figure 8a** shows a picture of a device printed with LHLC and RHLC compositions from the pair of stereoscopic projections of **Figure 8****.** The LHLC and the RHLC layers are printed such as to slightly overlap each other.
**Figure 8b** shows a picture of a device printed with LHLC and RHLC compositions from the pair of stereoscopic projections of **Figure 8****.** The LHLC and the RHLC layers are printed such as to partially overlap each other.
**Figure 9** shows a pair of mono-colour stereoscopic projections of a cube subdivided in a plurality of separate building blocks.
**Figure 10** shows a pair of mono-colour stereoscopic projections of a sphere subdivided in a plurality of separate building blocks.
**Figure 11a** shows a pair of mono-colour stereoscopic projections of a cube subdivided in a plurality of separate building blocks, the building blocks being discs.
**Figure 11b** shows the pair of mono-colour stereoscopic projections of a cube subdivided in a plurality of separate building blocks from **Figure 11a****,** printed as a negative image.
**Figure 12** shows a pair of mono-colour stereoscopic projections of a cube subdivided in a plurality of separate building blocks, the building blocks being dots.
**Figure 13** shows a pair of mono-colour stereoscopic projections of a cube subdivided in a plurality of separate building blocks, the building blocks being straight lines.
**Figure 14** shows a pair of mono-colour stereoscopic projections of a cube subdivided in a plurality of separate building blocks, the building blocks being "A" letter.
**Figure 15** shows a side view of a device, e.g. the device of **Figure 5****,** with partial superposition of the RHLC and of the LHLC image layers on an absorbing underlying surface, said RHLC and LHLC image layers consisting of the pair of stereoscopic projections. The LHLC and RHLC image layers are superimposed.
**Figure 15a** shows a side view of a device, e.g. the device of **Figure 5****,** with the RHLC and the LHLC image layers printed aside each other (not superimposed and contiguous position) on an absorbing underlying surface, said RHLC and LHLC image layers consisting of the pair of stereoscopic projections.
**Figure 15b** shows a side view of a device, e.g. the device of **Figure 5****,** with the RHLC and LHLC image layers printed aside each other (not superimposed and non-contiguous position) on an absorbing underlying surface, said RHLC and LHLC image layers consisting of the pair of stereoscopic projections.

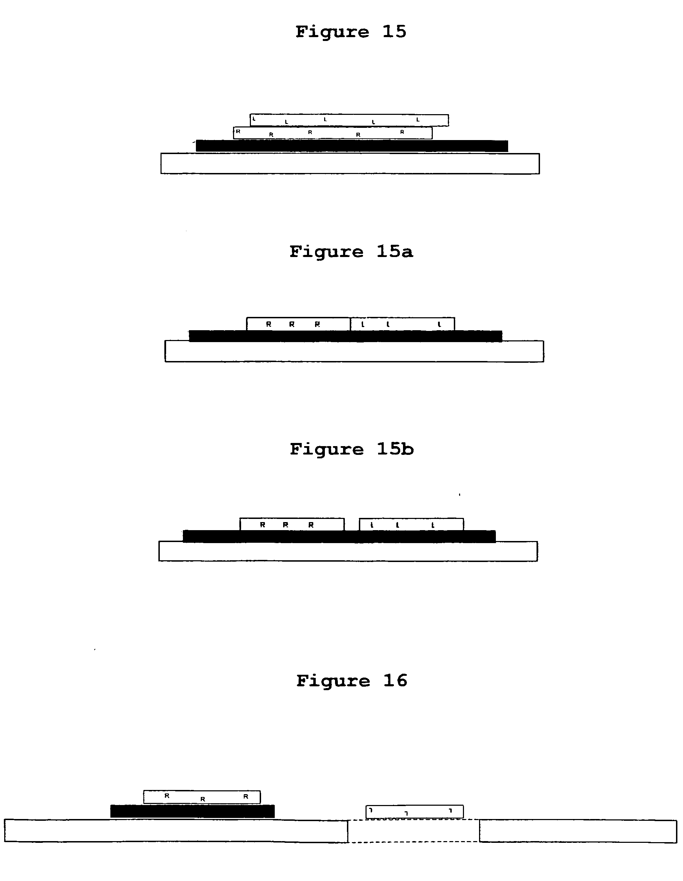

**Figure 16** shows a side view of a device with a first LC image layer printed on an absorbing surface and a second LC image layer printed on a transparent zone of the same substrate, said first and second image layers consisting of the pair of stereoscopic projections. The two LC image layers are superimposable: in order to see the three-dimensional device, the substrate must be folded in such a way that the second LC image layer printed on the transparent zone is laid on top of the first LC image layer. In this configuration, in order to reconstruct correctly the device with the 3-D appearance (3-D device), the two LC layers have to be printed by applying to the second stereoscopic projection a 180° rotation along a symmetry axis, parallel to the folding axis of the substrate.
**Figure 17** shows a side view of a device with a first LC image layer printed on an absorbing surface of a first substrate and the second LC image layer printed on a transparent area of a second substrate, said first and second image layers consisting of the pair of stereoscopic projections. In this configuration, in order to reconstruct correctly the 3-D device, the second image layer (printed on the transparent substrate) must lay on top of the image layer printed on the absorbing surface. The two LC image layers are superimposable.
**Figure 18** shows a side view of a device with the superposition of the RHLC and the LHLC image layers printed on a transparent substrate, said RHLC and LHLC image layers consisting of the pair of stereoscopic projections. A further substrate coated with an absorbing layer is required to visualize the LC image layers; the coated substrate is placed under the pair of superimposed LC image layers of the 3-D device. The LC layers are superimposed.

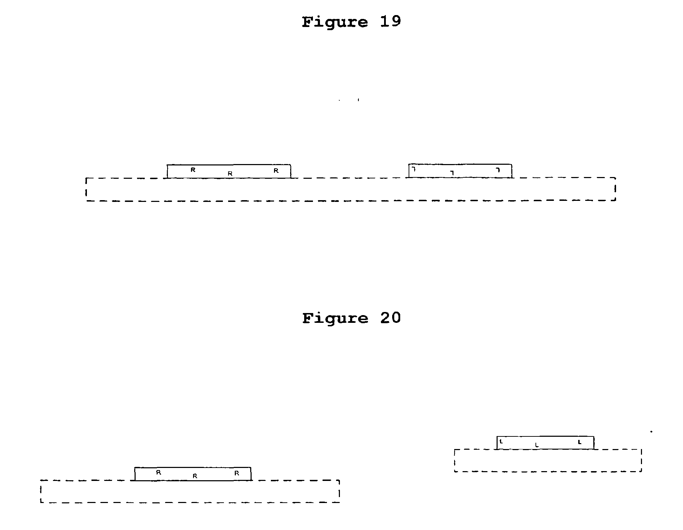

**Figure 19** shows a side view of a device with the RHLC and the LHLC image layers printed in different areas of a transparent substrate, said RHLC and LHLC image layers consisting of the pair of stereoscopic projections. The second LC image layer is printed in a reverse orientation according to a symmetry axis parallel to the folding axis of the substrate and the two LC image layers are superimposable (in a similar way as in **Figure 16**). A further substrate coated with an absorbing layer is required to visualize the LC image layers; said coated substrate is placed under the pair of superimposed LC image layers, the transparent substrate being folded such as to superimpose the LHLC and the RHLC image layers.
**Figure 20** shows a side view of a device with the RHLC and the LHLC image layers printed on 2 different transparent substrates, said RHLC and LHLC image layers consisting of the pair of stereoscopic projections. The LC image layers are superimposable. A further substrate coated with an absorbing layer is required to visualize the LC image layers; the coated substrate is placed under the pair of superimposed LC image layers.
**Figure 21a** shows a representation of the travel of a camera capturing a pair of images of a graphical object, e.g. a cube, at a constant distance from the object. The pair of stereoscopic projections are obtained by projecting on a 2-dimensional surface the pair of images captured by the camera.
**Figure 21b** shows a representation of the travel of a camera capturing a pair of images of a graphical object, e.g. a cube, wherein the camera travels along a path perpendicular to the shooting direction towards the object. The pair of stereoscopic projections are obtained by projecting on a 2-dimensional surface the pair of images captured by the camera.

### Detailed description

According to the present invention, the device representing a graphical object having a three-dimensional appearance when viewed with the appropriate viewing equipment is formed from a first and a second image layer. The first image layer is printed with a LC ink layer reflecting the left-handed polarized light (LHLC ink layer), said LC ink layer comprising left-handed chiral liquid crystal pigments (also called left-handed cholesteric liquid crystal pigments) (LHLC pigments) or left-handed chiral liquid crystal substances (also called left-handed cholesteric liquid crystal substances) (LHLC coating) of a first colour at a certain viewing angle, and the second image layer is printed with a LC ink layer reflecting the right-handed polarized light (RHLC ink layer), said LC ink layer comprising right-handed chiral liquid crystal pigments (also called right-handed *cholesteric* liquid crystal pigments) (RHLC pigments) or right-handed chiral liquid crystal substances (also called right-handed *cholesteric* liquid crystal substances) (RHLC coating) of the same or of a different colour at the same viewing angle. The two image layers are characterized by the fact that they represent a pair of stereoscopic projections of a graphical object and that the graphical object is composed of separate building blocks.

As used herein, the term *"LHLC pigments"* refers to the LC pigments comprised in the LHLC ink layer, and the term "RHLC pigments" refers to the LC pigments comprised in the RHLC ink layer.

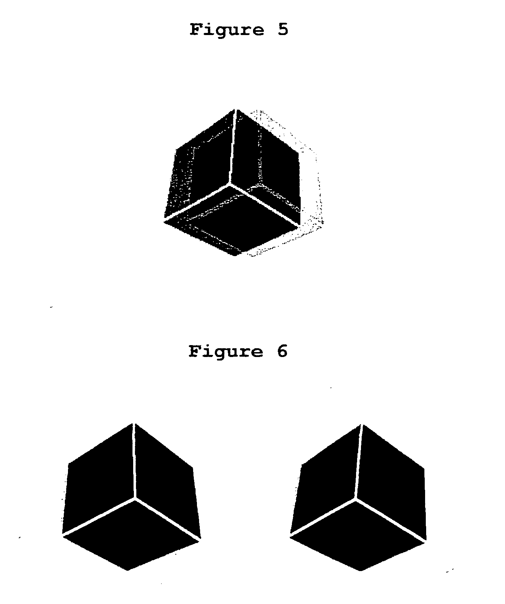

The idea of the present invention is shown in **Figure 5, Figure 6** and **Figures 8** to **14.** When printed with LHLC and RHLC image layers, **Figure 5, Figure 6** and **Figures 8** to **14** represent embodiments of the device of the present invention.

**Figure 5** shows an embodiment of the present invention with the two stereoscopic projections shown in **Figure 6** being printed such as to partially overlap each other.

In **Figure 6** and **Figures 8** to **14,** the stereoscopic projections have been printed aside and apart from each other for the sake of clarity of the representation; in a device according to the present invention, the stereoscopic projections are printed such as to partially overlap each other, or alternatively, are printed aside each other; for devices useful as security elements, the stereoscopic projections are preferably printed such as to partially overlap each other.

**Figure 6** illustrates an example of the present invention. **Figure 6** shows a pair of stereoscopic projections of the cube of **Figure 1** subdivided in 3 building blocks. The pair of stereoscopic projections are printed aside each other. When **Figure 6** is printed with LHLC and RHLC ink layers, an observer using an appropriate viewing equipment comprising circularly polarizing filters will observe from a distance providing an appropriate parallax of the two projections a 3-D representation of the cube.

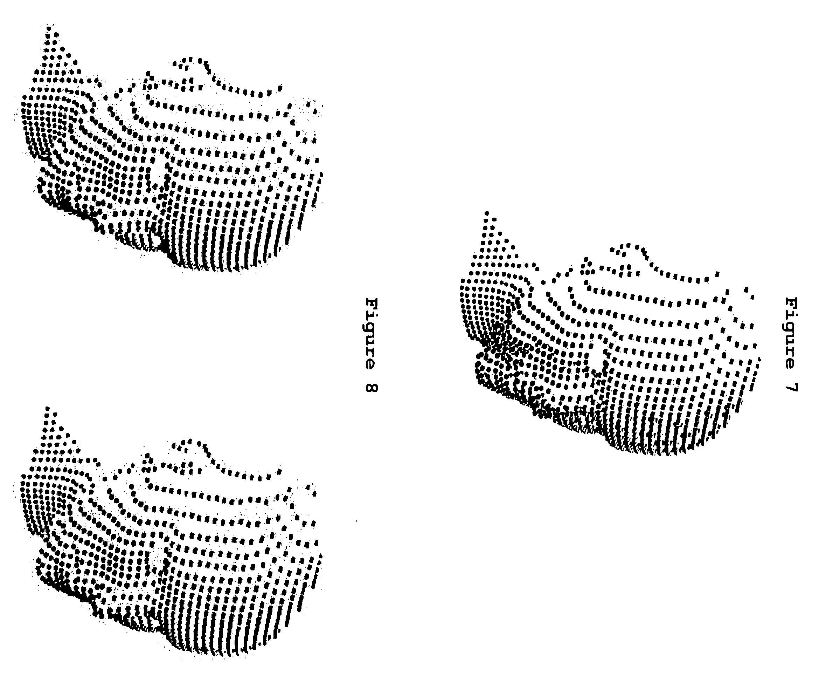

The image of **Figure 7** illustrates an example of the present invention. **Figure 7** shows the human head according to **Figure 3**, which is, however, now subdivided in a plurality of building blocks, here dots. The image of **Figure 7** is "cleaned" to remove the building blocks that belong to the face of the human head located on the back-side relative to the observer's position and thus hidden to the observer from his viewing position. The cleaning process improves the 3D-effect by avoiding any occlusions of building blocks. This "cleaning step" can be omitted if the division into building blocks is done by applying an appropriate set of building blocks onto the surface of the objects seen by the observer from his viewing angle.

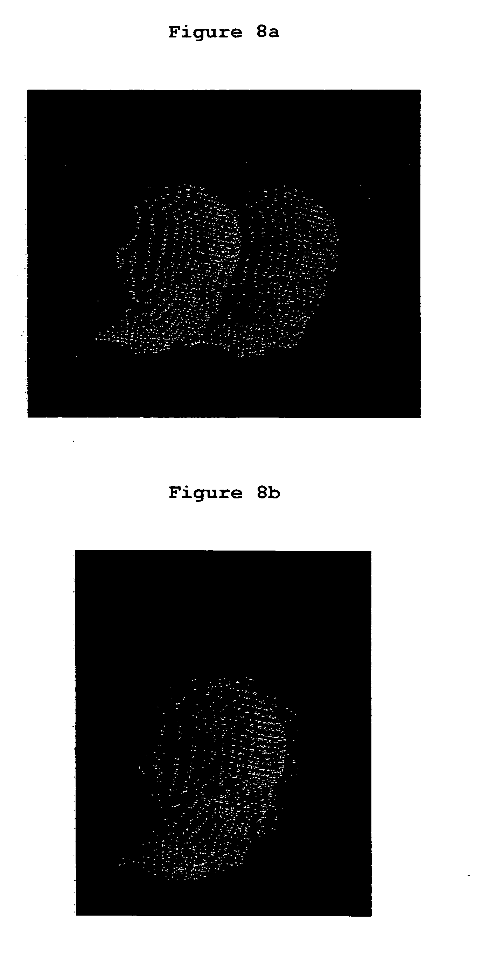

**Figure 8** shows a pair of stereoscopic projections of the subdivided graphical object produced by shooting two images of **Figure 7** from two different positions. The pair of stereoscopic projections are printed aside each other.

**Figure 8a** and **Figure 8b** show pictures of some devices according to the present invention based on a pair of stereoscopic projections of **Figure 8**. In **Figure 8a**, the stereoscopic projections slightly overlap each other, while in **Figure 8b** the stereoscopic projections are printed such as to strongly overlap each other. An observer looking at **Figure 8a** and using an appropriate viewing equipment comprising circularly polarizing filters will observe, from a distance providing an appropriate parallax of the two projections, a 3-D representation of the human head. The 3-D **effect** is still more spectacular with **Figure 8b** due to the stronger overlapping of the stereoscopic projections; **Figure 8b** may also be observed from a shorter distance as the appropriate parallax is obtained at a shorter distance with **Figure 8b** than with **Figure 8a**.

The circularly polarizing liquid crystals pigments (referred to as the *"LHLC and the RHLC pigments")* suitable for the present invention are known in the art, e.g. LC pigments commercialized under the trade name Helicone® from LCP Technology GmbH. LC pigments technology and their use in coatings and inks have been disclosed e.g. in EP 1 213 338 A1, EP 1 046 692 A1 or EP 0 601 483 A1, the respective disclosure of which is incorporated by reference herein. The cholesteric liquid crystals materials suitable for the present invention are known in the art and have been disclosed e.g. in US 6,410,130, the respective disclosure of which is incorporated by reference herein.

The LHLC and the RHLC pigments can be incorporated in conventional ink compositions according to the printing method selected to print the device of the present invention. Examples of suitable formulations may be found e.g. in The Printing Ink Manual, Ed R.H.Leach, R.J.Pierce, 5^{th} Edition.

Compositions comprising the LC pigments suitable for the present invention have been disclosed e.g. in EP 0 597 986 A1 or WO 2003/020 835 A1.

Preferably the ink compositions used for the present invention do not comprise any further pigments other than the LC pigments. Typical formulations comprising LC pigments used for the present invention are for instance:
- formulation for printing by flexography with a water-based ink:

| **Component** | **weight-%** |
|---|---|
| LHLC or RHLC Pigment | 10-30 |
| Acrylic/Alkyl resin binder | 50-70 |
| Polyethylene wax compound | 2-6 |
| Water | 10-20 |
| Silicone anti-foam | 0.1-0.5 |

- formulation for printing by flexography with a solvent-based ink:

| **Component** | **weight-%** |
|---|---|
| LHLC or RHLC Pigment | 10-30 |
| Maleic resin varnish | 10-25 |
| Nitrocellulose varnish | 30-50 |
| Wax compound | 2-6 |
| Plasticizer | 1-5 |
| Ethanol | 5-15 |
| Isopropyl acetate | 5-10 |

- formulation for printing by gravure:

| **Component** | **weight-%** |
|---|---|
| LHLC or RHLC Pigment | 10-30 |
| Nitrocellulose | 10-20 |
| Maleic resin | 2-6 |
| Wax dispersion | 2-6 |
| Dioctyl phthalate | 2-6 |
| Ethanol | 40-60 |
| Ethyl acetate | 2-8 |
| Glykol ether | 2-6 |

- formulation for printing by screen printing:

| **Component** | **weight-%** |
|---|---|
| LHLC or RHLC Pigment | 8-25 |
| Ethyl cellulose | 10-20 |
| Dioctyl phthalate | 2-10 |
| Propylene glycol methyl ether | 20-30 |
| Dipropylene glycol methyl ether | 2-10 |
| Aromatic hydrocarbon (160-180°C) | 20-40 |

- formulation for printing by screen printing with a UV curable ink:

| **Component** | **weight-%** |
|---|---|
| LHLC or RHLC Pigment | 8-25 |
| Prepolymers | 20-35 |
| Monomers/oligomers | 30-50 |
| Photoinitiators | 5-10 |
| Other additives | 1-5 |

Compositions comprising LC substances suitable for the present invention have been disclosed e.g. in US 6,410,130.

Suitable printing methods include silkscreen printing, flexo printing, heliogravure or inkjet printing.

Whereas in the LC pigments suitable for the present invention the liquid crystals are already aligned and polymerized (cured) in the cholesteric state, this is not the case for LC substances. After being applied by any of the above printing techniques, an alignment of the LC substances in the compositions has to be achieved before curing of the applied layers. According to the present invention, alignment of the LC substances is achieved by applying the layers comprising the LC substances onto a pre-patterned substrate. The substrate then acts as an alignment layer for the liquid crystals in the applied layers. The pre-patterning of the substrate can occur, for example, through a rubbing with a material, such as velvet, or with brushes or through a suitable exposure. Alignment of the LC substances occurs through an interaction with the pre-patterned substrate. Thereafter, the aligned LC layers can be cured as usual, preferably by UV-curing. This method of alignment of LC substances is known, e.g. from US 2011/0095518 A1, the respective content of which is incorporated herein by reference.

Ink compositions suitable for the present invention may be cured as known to the skilled person, e.g. by physical drying (evaporation of solvent), UV-curing, electron beam curing, heat-set, oxypolymerization, by combinations thereof, or by other curing mechanisms. Preferably UV-curable ink compositions are used for the present invention.

As used herein the device is useful as a security element or security feature for the protection of banknotes, value documents, identity documents or, generally any articles which requires authentication.

As used herein, the term *"security element"* shall designate an element on a banknote or another security document for the purpose of determining its authenticity and protecting it against counterfeits.

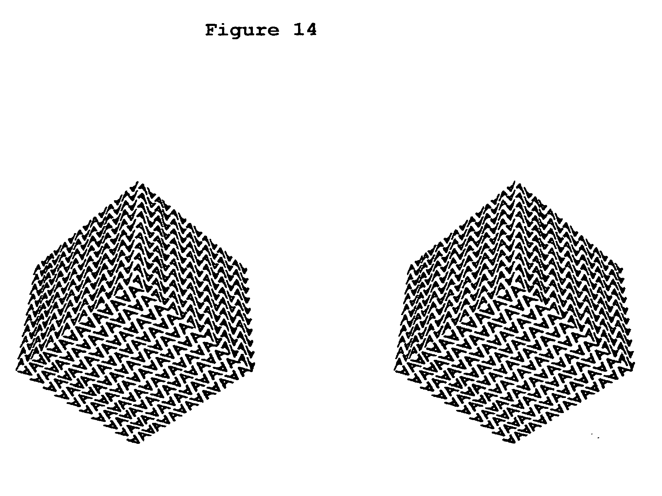

As used herein, the term *"building blocks"* refers to a group of geometrical figures which together form a graphical object, such as but not limited to, squares, rectangles, polygons, circles, dots, discs, ellipsoids, straight lines, curved lines, or any closed surfaces delimited by any sinusoidal lines. The term "separate building blocks" may also refer to letters, texts, logos, numbers or images. These building blocks may comprise some void areas, such as for example the void area in a capital "A" letter (see **Figure 14**). The building blocks forming the graphical object may be arranged in an equidistant alignment or in a random manner in such a way that the brain of an observer can combine the separate building blocks to one represented object. In other words, the distance between the separate building blocks has to be sufficiently wide so that an observer recognizes the building blocks as being separate from one another. The space between two building blocks helps to define the edges of the subdivided object; the pair of stereoscopic images of every building block contributes to define the volume of the represented object or of the represented scene.

In each one of the pair of stereoscopic projections, the building blocks are completely or partially separated from each other, depending on the positions of the camera relative to the object when creating the pair of images.

As used herein, the term "*separate building blocks*" refers to the fact that within the subdivided graphical object, the building blocks forming the object are arranged in such a way that they are separately distinguishable, wherein within the stereoscopic projections, the building blocks may partially overlap each other. As used herein, the term "*separate building blocks*" refers to the fact that the underlying background of the ink layers is *apparent* between the building blocks; the term "apparent" means *visible* to the naked eye of an observer.

The number of building blocks required to subdivide a graphical object depends on the size of the device, on the complexity of the represented object and on the achievable printing resolution.

For simple graphical objects, division in two building blocks may suffice to give enough indication of the 3-D shape of the represented object; for more complex represented objects or scenes, a plurality of building blocks are necessary to give a good 3-D representation. The optimal number and position of the separate building blocks for a given graphical object may be determined by a skilled person by common routine.

The subdividing process is performed on the graphical object. The images captured by a camera to produce the pair of stereoscopic projections are produced after the division of the graphical object into separate building blocks.

An inverse sequence of steps (production of stereoscopic projections followed by division into building blocks) would lead to difficulties in keeping the coherence between the two stereoscopic projections and thus impede the production of a device with a 3-D effect.

The two images captured by a camera to produce the pair of stereoscopic projections are typically obtained with a small change of the visual perspective of the image obtained by a small translation of the camera (see **Figures 21a** and **21b**). The two shooting positions and angles of the camera should be selected such that most building blocks forming the graphical object remain distinguishable from the neighbouring building blocks; in such a configuration, two separate building blocks do not overlap each other, or two separate building blocks only partially overlap each other.

In **Figures 5** to **14**, embodiments according to the present invention are shown in which graphical objects of varying complexity are made up from an appropriate number of separate building blocks with varying form and complexity.

As used in the present invention, the term "graphical object" refers to a representation of a virtual object or to a representation of a real object.

Represented objects useful to create devices of the present invention comprise simple objects, e.g. a line or a 2-D drawing, or very complex objects, e.g. a view of a sculpture like e.g. a human head.

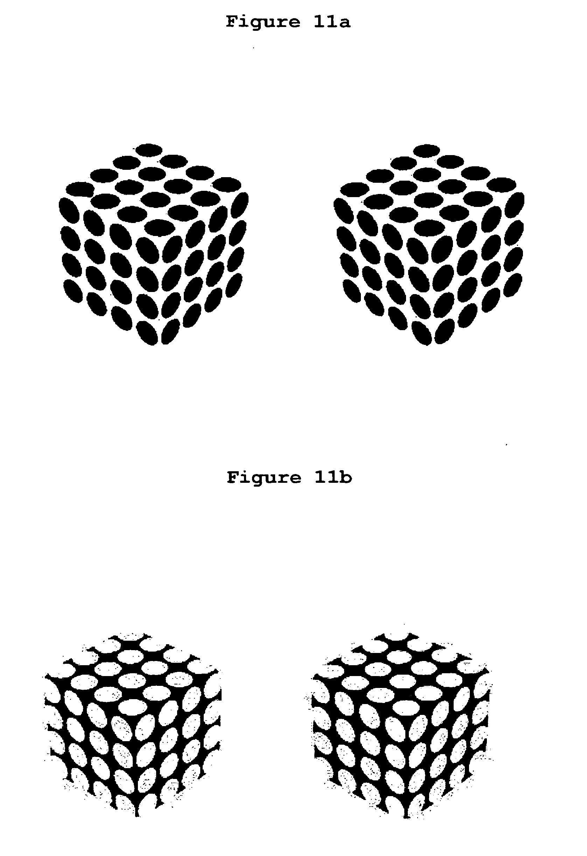

The graphical object of the present invention may be depicted as a positive image or as a negative image. When the object is depicted as a positive image, the building blocks composing the object, e.g. squares, rectangles, polygons, circles, dots, discs, ellipsoids, straight lines, curved lines, closed surfaces delimited by any sinusoidal lines, letters, texts, logos, numbers or images, are printed with the LC ink layers. When the object is depicted as a negative image, the separation areas between the building blocks are printed with the LC layers. **Figure 11a** represents an example of a pair of stereoscopic projections of a positive image of a subdivided cube according to the present invention; **Figure 11b** represents an example of a pair of stereoscopic projections of a negative image of a subdivided cube according to the present invention.

According to the present invention, the device having a three-dimensional appearance is obtained by applying two or at most four ink layers from printing inks comprising the above described cholesteric LC pigments or LC substances, preferably by applying two or at most four ink layers from printing inks comprising the above described cholesteric LC pigments.

Suitable substrates as used in the present invention are paper, composite material or plastic substrate. For example, in the case of banknotes the substrate is paper, composite material or polymer.

The porosity of the substrate printed with the device may influence the quality of the perceived 3-D effect. On porous or fibrous substrates, variation of the brilliance may appear in different zones of the pair of LC ink layers depending on the underlying layer in these zones. Such brilliance variations within the LC layers may lead to a degradation of the 3-D effect. To improve the optical quality of the LC ink layers and to prevent such variations of the brilliance, porous or fibrous substrates may be coated with a first coating layer, a primer layer. Such primer layers are known in the art and have been used for instance to improve the visual aspect of security elements based on magnetically oriented images (see WO 2010 058026).

As used herein, the term "*underlying background*" of the LHLC and RHLC ink layers refers to the surface on which the LC ink layers are printed or are placed.

The underlying background of the ink layers can be a non-transparent *absorbing* surface or a *transparent* surface.

As used herein, the terms "*absorbing*" *or* "*light-absorbing*" surface or background refer to a layer that absorbs at least part of the visible spectrum of light, preferably to a surface of a dark colour, most preferably to a black surface.

In the case of an *absorbing* background, the background surface may consist of an underlying coating layer printed on the substrate or of the opaque substrate itself.

As used herein, the term "*transparent*" means providing for optical transparency at least in part of the visible spectrum (400-700 nm). Transparent substrates may be coloured, entirely or in part, provided that there is transparency in at least part of the visible spectrum, such as to allow an observer to see through the substrate.

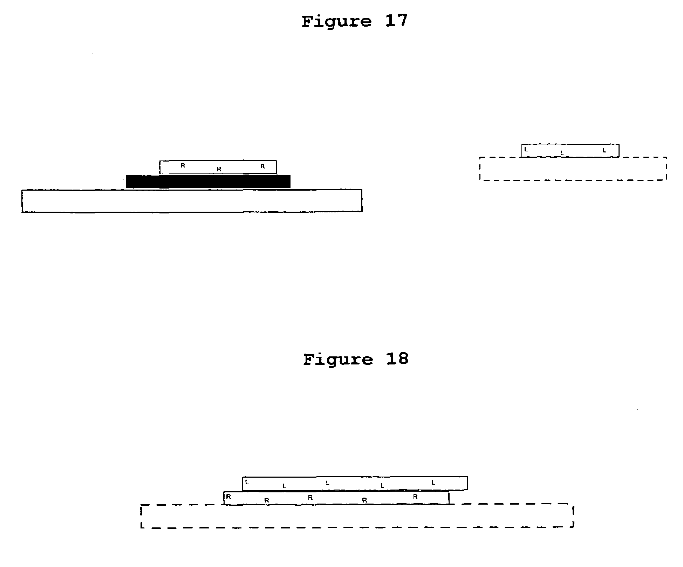

**Figure 15** to **Figure 20** illustrate examples of the different arrangement the LHLC and the RHLC image layers on absorbing or transparent substrates. In the **Figure 15** to **Figure 20**, the LHLC and the RHLC image layers may be arranged as shown in the Figures or the layers may be swapped with each other.

When the device is printed on a transparent background, either the LHLC image layer, the RHLC image layer or both the LHLC and the RHLC image layers may be printed on a transparent surface.

When one of the LHLC or the RHLC image layers is printed on a transparent surface and the other image layer is printed on an absorbing surface, the absorbing surface and the transparent surface may be part of the same substrate or may be part of two different substrates. When the transparent and the absorbing surface are part of one substrate, the two LHLC and RHLC ink layers may be observed as a 3-D device by folding the substrate such as the printed transparent surface is laid on top of the printed absorbing surface.

As used herein, the term "*superimposed*" stereoscopic projections or "*superimposed*" LC image layers or "*superimposed*" LC ink layers means that the first and the second LC ink layers corresponding to the first and the second stereoscopic projections are printed on top of each other in a partial overlapping position. An entire absolute overlapping in register is prevented by the slight difference between the 2 stereoscopic projections.

As used herein, the term "*not superimposed*" stereoscopic projections or "*not superimposed*" LC image layers or "*not superimposed*" LC ink layers means that the first and the second stereoscopic projections are printed aside each other in a contiguous or a non contiguous position, with a distance between the projections of a few centimetres, preferably 0-5 cm, more preferably 0-3 cm, and most preferably 0-1 cm.

As used herein, the term "*superimposable* stereoscopic projections or *"superimposable"* LC image layers or *"superimposable"* LC ink layers means that the first and the second stereoscopic projections are printed on two different substrates, at least one of the two substrates being transparent, and can be laid on each other; or alternatively the term *"superimposable stereoscopic projections"* or *"superimposable LC image layers"* or *"superimposable*" LC ink layers means that the first and the second stereoscopic projections are printed on two different zones of the same substrate, at least one of the two zones being transparent, and can be superimposed on the second zone by folding the substrate.

When the LHLC and the RHLC image layers are printed both on a transparent surface, both image layers may be printed on the same transparent surface, or both image layers may be printed on two different transparent surfaces comprised in the same or in two different substrates. The LHLC and RHLC image layers are superimposed either by folding the one substrate or by superposing both substrates so that the printed transparent layers laid on each other. When both the LHLC and the RHLC image layers are printed on a transparent surface, the superposed LC image layers must be placed on top of an absorbing surface to let the two stereoscopic projections and the 3D-effect being visible for an observer using appropriate circularly polarizing filters.

It is known in the art that some axially oriented polymer materials may interfere with the circularly polarized light; such polymer materials would impact the three-dimensional effect of the device when one of the stereoscopic projections of the graphical object is seen through the axially oriented polymer in the device. Therefore, when one of the LC ink layers within the device is seen through the transparent substrate, said transparent substrate does not consist of axially oriented polymer materials.

Both LC layers must be completely enclosed within the boundaries of the underlying absorbing surface. In case one or both LC layers are positioned outside of the underlying absorbing surface, the 3-D perception may partially or completely fade away.

In order to see the three-dimensional effect of the device provided by the stereoscopic pair of images, for example the observer needs to use an appropriate viewing equipment, in particular special glasses with circularly polarizing filters or lenses, as described in US 5,457,554. The viewing equipment may preferably be eyeglasses comprising a pair of circularly polarizing filters or lenses, a left circularly polarizing filter or lens and a right circularly polarizing filter or lens, each filter or lens covering one eye of the observer wearing those eyeglasses. The LHLC image layer is seen through the left circularly polarizing filter or lens and the RHLC image layer is seen through the right circularly polarizing filter or lens. Thus the observer using the viewing equipment sees each LC ink layer with only one eye: thus one of the stereoscopic projections represents the right-eye image and the second stereoscopic image represents the left-eye image. The image of the object with the 3-D effect is reconstructed by the observer's brain.

The method of the present invention discloses means to provide a three-dimensional effect with only one single colour at the same viewing angle LC material (one pair of LHLC and RHLC material) or with LC materials of 2 different colours at the same viewing angles.

When the LHLC and the RHLC ink layers are of different colour at the same viewing angle, the colour seen with the viewing equipment is the additive colour of the two layers.

The present invention is also related to a process for producing a three-dimensional image, comprising the steps of
a) subdividing a graphical object in two separate building blocks or in a plurality of separate building blocks, said building blocks being identical or different, using a computer software;
b) generating for each building block a left-eye and a right eye images corresponding to a first and a second stereoscopic projections of the subdivided graphical object;
c) transferring the said first and second stereoscopic projections to a printing plate or support, or to a pair of printing plates or supports, according to the printing method to be used to print the LHLC and RHLC ink layers;
d) printing said first stereoscopic projection by using a first LHLC or RHLC ink composition;
e) optionally curing said first ink composition;
f) printing said second stereoscopic projection by using a second RHLC or the LHLC ink composition, said second LC ink composition reflecting circularly polarized light of opposite direction than said first LC ink composition;
g) curing the not yet cured ink composition.

When the 2 stereoscopic views are printed aside each other with no overlapping of the two LC ink layers, the step e) can be omitted: both LC layers are cured simultaneously in step g).

For the step a), the division of the graphical object into separate building blocks, various appropriate software may be used. For instance, the publicly available program *Blender* (free software under the GNU General Public Licence) can be used; other software's, such as 3DMax, Cinema 4D, Softimage or any similar tool may be used to achieve the same or analogous results.

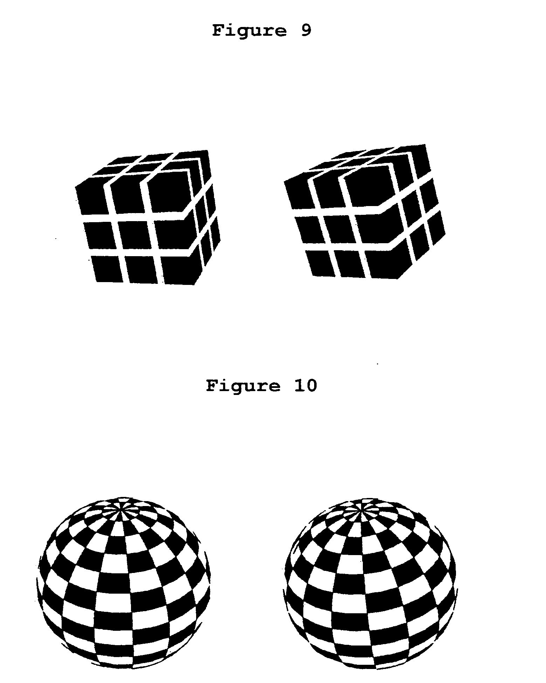

The step a), division of the graphical object into separate building blocks, is preferably achieved as follows using the *Blender* software:
i) selection of the graphical object to be subdivided by using the <Addition> function to add a *"mesh";* as used in the software, the term *mesh* refers to a virtual object, as e.g. a square, a cube, a sphere, a human head, or any other object that can be represented in the device of the present invention;
ii) using the <Edit Menu/Subdivide> function of the software, the graphical object is subdivided in building blocks. For instance, a cube is subdivided by subdividing each of its faces into a plurality of building blocks, e.g. squares. For instance **Figure 9** shows a pair of stereoscopic images of a cube created by subdividing each face into nine squares.

Alternatively, the step a) division of the graphical object into separate building blocks above is achieved as followed:
j) addition, by using the <Addition> function of the Blender software, of a *"mesh"* such as e.g. a square, a dot, or a **capital** letter A;
jj) copy and multiple paste of the mesh of step j), a plurality of building blocks are created and arranged in such a way as to represent a subdivided graphical object e.g. a cube. For instance the **Figure 11a** or the **Figure 14** show pairs of stereoscopic projections of cubes that can be created by copy/paste of a disc or a capital letter A respectively.

In a further alternative, useful in particular for the subdivision of a graphical object representing a virtual or real object with an irregular uneven surface, the step a) subdividing the graphical object into separate building blocks is achieved advantageously as follows using the *Blender* software:
k) creation by copy/paste of a network composed of a plurality of meshes (e.g. a plurality of squares or of cubes);
kk) by linear translation using the Mapping function of the software Blender, the meshes are stacked on to the surface of a virtual object serving as a mould, e.g. a human head; the virtual object is removed, leaving only the network of meshes with the shape of the virtual or real object.

The number of building blocks and the types of building blocks may be selected according to the desired effect. According to the complexity of the graphical object and to the number of building blocks, the subdividing step of the object in building blocks (step a)) may comprise additionally a *"cleaning process"* of the building blocks: when the graphical object subdivision is done with a software, the subdivided graphical object may comprise building blocks pertaining to the back-side (hidden side) of the represented virtual object which should not be visible to the observer from his viewing angle; occlusions of the back-side building blocks through the front-side building blocks occur; in order to improve the 3-dimensional effect of the printed device said building blocks from the back-side may be removed in a cleaning process. For instance in **Figure 7** building blocks occlusions are visible on the chin of the human head; after the cleaning process, the contours of the chin are more precise (as seen in each stereoscopic projection in **Figure 8**).

The same software used for the subdivision of the graphical object (Blender, 3DMax, Cinema 4D, Softimage or any similar tool) may also be used to create the stereoscopic images corresponding to the stereoscopic projections of the subdivided graphical objects by using the virtual camera tool of these software. For instance, the *Blender* software is also used to shoot the stereoscopic images of the subdivided graphical objects with virtual cameras.

Genuine pictures resulting from shooting existing or virtual subdivided objects with a real camera may also be used to create the pair of images corresponding to the pair of stereoscopic projections.

The methods for the step c), transfer of the stereoscopic projections to the appropriate printing plates or supports according to the printing method, depend on the selected printing technique. These methods are widely used in the printing industry and are described in reference handbooks, e.g. in Printing Technology, JM Adams and P.A. Dolin, Delmar Thomson Learning, 5th Edition.

For instance, for printing the device by screen printing, a stencil for each one of the first and the second stereoscopic projection is produced by process known in the art, e.g. by producing photographic stencil as described in e.g. Printing Technology, JM Adams and P.A. Dolin, Delmar Thomson Learning, 5th Edition, page 302-312:
1) each one of the first and the second stereoscopic projections is printed as a black-and-white positive image on a transparent overlay with a laser printer;
11) a first and a second mesh screens are coated with a photo-emulsion and dried in the dark;
111) each transparent overlay (corresponding to the first and the second stereoscopic projections of the subdivided graphical object) are placed over each emulsion-coated screen and then exposed to UV-light;
1111) each screen is washed off thoroughly to removed the not exposed emulsion leaving on each mesh screen a negative stencil image of each stereoscopic projection.

The first mesh screen with the first negative stencil is used to print the first image layer corresponding to the first stereoscopic projection, with the LHLC or alternatively with the RHLC ink composition; the second mesh screen with the second negative stencil is used to print the second image layer corresponding to the second stereoscopic projection, with the RHLC or alternatively the LHLC ink composition.

In the steps e) and g), the LC ink composition are cured by physical drying (evaporation of solvents), UV-curing, e-beam curing, heat set, oxypolymerization, or combinations thereof, most preferably by UV-curing.

When the ink compositions used to print the pair of stereoscopic images comprise cholesteric liquid crystal *substances,* the LC substances are aligned to form LC phases before the ink compositions are cured by physical drying (evaporation of solvents), UV-curing, e-beam curing, heat set, oxypolymerization, or combinations thereof, most preferably by UV-curing.

The device according to the present invention may be printed by various printing methods such as silkscreen printing, flexo printing, heliogravure or inkjet printing; the LC layers are most preferably printed by silkscreen printing.

### Examples

In order to illustrate the process for the creation of subdivided graphical objects in accordance with the present invention, examples were prepared using the publicly available program Blender (free software under the GNU General Public Licence) for the 3-D computer modelling of objects.

The Blender software was also used to shoot the images used to form the stereoscopic projections of the subdivided graphical object with virtual cameras.

### Comparative Example 1: Pair of mono-colour stereoscopic projections of a non-subdivided cube (Figures 1 and 2)

By observing a mono-colour representation of the pair of stereoscopic projections of a cube without shade gradients, reflections or shadows, an observer, using an appropriate viewing equipment such as a pair of circularly polarizing filters, could not interpret the represented object as a 3-D object (even if the projections are printed with LHLC and RHLC layers). The object looked like a flat irregular polygon (**Figure 1**).

When the stereoscopic projections of **Figure 1** were superimposed (**Figure 2**), an observer still could not observe the 3-D effect even when using an appropriate viewing device such as a pair of appropriate circularly polarizing filters

### Example 1: Pair of mono-colour stereoscopic projections of a subdivided cube (Figure 6)

A graphical object, a representation of a virtual cube, was subdivided in separate building blocks according to the method of the present invention. A pair of stereoscopic projections of the subdivided cube was generated by shooting a pair of image from two different positions. When the pair of stereoscopic projections of the subdivided graphical object were printed with LHLC and RHLC layers, an observer using an appropriate viewing equipment such as a pair of appropriate circularly polarizing filters observing the device from a distance providing an appropriate parallax of the two projections observed a 3-D shape.

**Figure 5** was obtained by printing the pair of stereoscopic projections of **Figure 6** such that they partially overlapped each other.

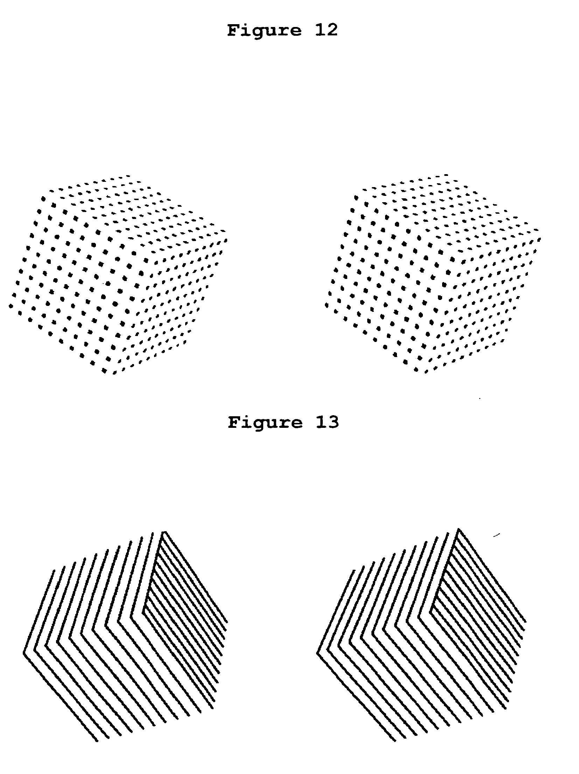

In a similar way, **Figures 9****,** **11****,** **12, 13****,** **14** represent mono-colour stereoscopic projections of a cube with different types of building blocks. (the building blocks are in **Figure 9** cubes, in **Figure 11a** discs as a positive image, in **Figure 11b** discs as a negative image, in **Figure 12** dots, in **Figure 13** lines, in **Figure 14** capital letters A).

### Example 2: Pair of mono-colour stereoscopic projections of a subdivided cube partially overlapping each other (Figure 5).

A graphical object, a representation of a virtual cube, was subdivided in separate building blocks according to the method of the present invention. A pair of stereoscopic projections of the subdivided cube was generated by shooting a pair of image from two different positions. The pair of stereoscopic projections of the subdivided graphical object were printed with LHLC and RHLC layers such as to partially overlap each other. An observer using an appropriate viewing equipment such as a pair of appropriate circularly polarizing filters observed a 3-D shape even from a very short distance such an arm length or a shorter distance.

### Example 3: Pair of mono-colour stereoscopic projections of a subdivided sphere (Figure 10).

A graphical object, a representation of a virtual sphere, was subdivided in separate building blocks according to the method of the present invention. Here, good results were obtained by separating the sphere into building blocks along its latitudes and longitudes.

### Comparative example 2:

A virtual 3-D object (a virtual human head) was modelized with the Blender software and printed using inks of different grade of grey colour (shadow areas) (**Figure 3**). The 3-D shape of the object was recognizable.

The image of **Figure 3** was printed with a mono-colour ink (**Figure 4**). The 3-D shape was not recognizable anymore.

### Example 4:

The image of **Figure 3** was subdivided in a plurality of building blocks, in this example dots, according to the method of the present invention (**Figure 7**) using the program *Blender.* The 3-D shape of the object was recognizable.

A "cleaning" of the image of **Figure 7** was performed by removing the building blocks (dots) that should not be visible from the chosen viewing angle. The cleaning process improved the 3D-effect by avoiding any occlusions of building blocks.

A pair of images of **Figure 7** was created using the virtual cameras of the software *Blender* giving the pair of stereoscopic projections (**Figure 8**).

The pair of stereoscopic projections of **Figure 8** were used to produce a pair of stencils by the photographic stencil method:
i) the stereoscopic projections were printed as a black-and-white positive image on a transparent overlay with a laser printer;
ii) two mesh screens were coated with a photo-emulsion and dried in the dark;
iii) each transparent overlay (corresponding to the left-eye and to the right-eye projections of the subdivided object) was placed over each emulsion-coated screen and then exposed to UV-light;
iv) each screen was washed off thoroughly to removed the not exposed emulsion leaving on each mesh screen a negative stencil of each stereoscopic projections.

Preparation of the ink compositions comprising the LC pigments:

| **Component** | **Parts by weight (g)** |
|---|---|
| Ebecryl 438 | 30 |
| TPGDA | 46 |
| Ebecryl 438 | 30 |
| PI | 5 |
| Aerosil 200 | 2 |
| LHLC or RHLC Pigment | 17 |

In the composition above, PI represented a blend of photoinitiators with the following composition:

| **PI Blend** | **Component** | **Weight** % |
|---|---|---|
| | ITX | 13 |
| | EPD | 14 |
| | BZP | 13 |
| | BDK | 40 |
| | IRGACURE 369 | 20 |

| | | |
|---|---|---|
| ITX**:** isopropyl thioxanthone; EPD: Ethyl-4-dimethylamino benzoate; BZP: 4-phenyl benzophenone; BDK: benzyl dimethyl ketal | | |

a) The pair of stereoscopic images of **Figure 8** was printed on a black-coated Chromolux cardboard using the LHLC ink composition with one of the mesh-screens and the RHLC ink composition with the second mesh-screen aside each other. The ink layers were cured by UV-irradiation.

**Figure 8a** shows a picture of the device obtained by this method.
b) Alternatively one of the stereoscopic projections of **Figure 8** was printed on a black-coated Chromolux cardboard using the LHLC containing ink composition with one of the mesh-screens. The ink layer was dried by UV-curing.

The second stereoscopic projection of **Figure 8** was printed with the RHLC containing ink composition with the second mesh-screen such as to partially overlap the first stereoscopic projection. Said second ink layer was cured by UV-irradiation.

**Figure 8b** shows a picture of the device obtained by this method.

An observer viewing the resulting devices (**Figure 8a** and **Figure 8b**) and using an appropriate viewing device such as a pair of circularly polarizing filters recognized the 3-D shape of the object when observing the image formed by the pair of stereoscopic projections from a distance providing an appropriate parallax.

For **Figure 8b****,** the best 3-D effect was observable from a very short distance, e.g. an arm-length distance or a shorter distance; **Figure 8a** was best observed from a larger distance than **Figure 8****b.**

## Claims

1. Device comprising, on an underlying background, first and second ink layers which together represent a graphical object exhibiting, when observed with an appropriate viewing equipment, a three-dimensional appearance,
wherein one of said ink layers shows a first colour at a certain viewing angle and is a left-handed circularly polarizing coating or comprises left-handed circularly polarizing pigment,
and the other of said ink layers shows the same or another colour at said viewing angle and is a right-handed circularly polarizing coating or comprises right-handed circularly polarizing pigment,
said first and second ink layers representing a first and a second image of a pair of stereoscopic projections of said graphical object, and
said first and second ink layers being superimposed on each other, or being superimposable on each other, or being printed aside each other,
**characterized in that**
said graphical object is composed of separate building blocks, and
that, within each of the stereoscopic projections, the building blocks forming the graphical object are represented such as to let the underlying background of said ink layers be *apparent* between the building blocks.

2. Device according to claim 1,
**characterized in that** said circularly polarizing pigments are chiral optically variable liquid crystal pigments.

3. Device according to claim 1,
**characterized in that** said circularly polarizing coatings comprises chiral optically variable liquid crystal substances.

4. Device according to any of the claims 1 to 3, **characterized in that** the stereoscopic projections of the graphical object comprise only those building blocks which belong to the surface of the graphical object which is seen by the observer from his viewing angle.

5. Device according to any of the claims 1 to 4, **characterized in that** said building blocks are squares, rectangles, polygons, circles, dots, discs, ellipsoids, straight or curved lines, closed surfaces delimited by any sinusoidal lines, letters, texts, logos, numbers or images, said building blocks comprising or not comprising void areas.

6. Device according to any of the claims 1 to 5, **characterized in that** said graphical object is composed of identical building blocks.

7. Device according to any of the claims 1 to 5, **characterized in that** said graphical object is composed of different building blocks.

8. Device according to any of the claims 1 to 7, **characterized in that** said ink layers are provided on a substrate having a light *absorbing* surface.

9. Device according to any of the claims 1 to 7, **characterized in that** said ink layers are provided on one or on two *transparent* substrates.

10. Device according to any of the claims 1 to 7, **characterized in that**
one of said first and second ink layers is provided on a substrate having a light *absorbing* surface,
and the other of said ink layers is provided on a *transpar*ent substrate.

11. Device according to any of the claims 1 to 10, **characterized in that** said ink layers are UV-curable.

12. Method for preparing a device according to any of the claims 1 to 11, said method comprising the step of applying a first and a second ink composition to form a first and a second ink layer by a printing method, preferably selected from the group consisting of silkscreen printing, flexo printing, heliogravure or inkjet printing, most preferably by silkscreen printing, onto a substrate
wherein one of said ink compositions comprises left-handed circularly polarizing cholesteric liquid crystal pigments having a first colour at a certain viewing angle, and the other ink composition comprises right-handed circularly polarizing cholesteric liquid crystal pigments of the same or of another colour at said viewing angle.

13. Method for preparing a device according to any of the claims 1 to 11, said method comprising the steps of
a) applying a first and a second ink composition onto a pre-patterned substrate by a printing method, preferably selected from the group consisting of silkscreen printing, flexo printing, heliogravure or inkjet printing, most preferably by silkscreen printing, to form a first and a second ink layer,
wherein one of said ink compositions comprises a left-handed circularly polarizing cholesteric liquid crystal substance having a first colour at a certain viewing angle, and the other ink composition comprises a right-handed circularly polarizing cholesteric liquid crystal substance of the same or of another colour at said viewing angle;
b) aligning said layers comprising said cholesteric liquid crystal substances by interaction with the pre-patterned substrate; and
c) curing the layers applied and aligned in steps a) and b) .

14. Method for producing a device representing a graphical object exhibiting, when observed with an appropriate viewing equipment, a three-dimensional appearance,
**characterized by** the steps of
- subdividing said graphical object into separate building blocks;
- generating a first and a second stereoscopic projections of the subdivided graphical object onto the printing plane.

15. Method according to any of the claims 12 to 14, **characterized in that** the first ink layer is cured before the second ink layer is applied, preferably by UV-curing.

16. Authentication system, comprising a device according to any of the claims 1 to 15 and a viewing equipment, preferably eyeglasses comprising a left and a right circularly polarizing filter for the two lenses, each lens covering one eye of an observer wearing those glasses.

17. Use of a device according to any of the claims 1 to 11 for the protection against counterfeiting of a commercial good or a security document selected from the group consisting of the banknotes, value documents or cards, transportation tickets or cards, tax banderols, and product labels.

## Patentansprüche

1. Erzeugnis, das auf einem zugrundeliegenden Untergrund eine erste und eine zweite Druckfarbenschicht aufweist, die gemeinsam ein grafisches Objekt darstellen, das, wenn es mit einem geeigneten Betrachtungsgerät betrachtet wird, ein dreidimensionales Aussehen aufweist,
wobei eine der Druckfarbenschichten eine erste Farbe bei einem bestimmten Betrachtungswinkel zeigt und eine linkszirkular polarisierende Beschichtung ist oder ein linkszirkular polarisierendes Pigment aufweist,
und die andere der Druckfarbenschichten dieselbe oder eine andere Farbe bei demselben Betrachtungswinkel zeigt und eine rechtszirkular polarisierende Beschichtung ist oder ein rechtszirkular polarisierendes Pigment aufweist,
wobei die erste und zweite Druckfarbenschicht ein erstes und ein zweites Bild eines Paars stereoskopischer Projektionen des grafischen Objekts darstellen und
die erste und zweite Druckfarbenschicht übereinander liegen oder übereinander gelegt werden können oder seitlich nebeneinander gedruckt sind,
**dadurch gekennzeichnet, dass**
das grafische Objekt aus getrennten Bausteinen besteht und
dass die Bausteine, die das grafische Objekt bilden, innerhalb jeder der stereoskopischen Projektionen so dargestellt sind, dass der zugrundeliegende Untergrund der Druckfarbenschichten zwischen den Bausteinen *ersichtlich* ist.

2. Erzeugnis nach Anspruch 1,
**dadurch gekennzeichnet, dass** die zirkular polarisierenden Pigmente chirale optisch variable Flüssigkristallpigmente sind.

3. Erzeugnis nach Anspruch 1,
**dadurch gekennzeichnet, dass** die zirkular polarisierenden Beschichtungen chirale optisch variable Flüssigkristallsubstanzen umfassen.

4. Erzeugnis nach einem der Ansprüche 1 bis 3,
**dadurch gekennzeichnet, dass** die stereoskopischen Projektionen des grafischen Objekts nur jene Bausteine umfassen, die zur Oberfläche des grafischen Objekts gehören, die vom Betrachter aus seinem Betrachtungswinkel sichtbar ist.

5. Erzeugnis nach einem der Ansprüche 1 bis 4,
**dadurch gekennzeichnet, dass** die Bausteine Quadrate, Rechtecke, Vielecke, Kreise, Punkte, Scheiben, Ellipsoide, gerade oder gekrümmte Linien, geschlossene Flächen, die durch beliebige sinusförmige Linien begrenzt sind, Buchstaben, Texte, Logos, Zahlen oder Bilder sind, wobei die Bausteine leere Flächen umfassen oder nicht.

6. Erzeugnis nach einem der Ansprüche 1 bis 5,
**dadurch gekennzeichnet, dass** das grafische Objekt aus identischen Bausteinen aufgebaut ist.

7. Erzeugnis nach einem der Ansprüche 1 bis 5,
**dadurch gekennzeichnet, dass** das grafische Objekt aus verschiedenen Bausteinen aufgebaut ist.

8. Erzeugnis nach einem der Ansprüche 1 bis 7,
**dadurch gekennzeichnet, dass** die Druckfarbenschichten auf einem Substrat mit einer *lichtabsorbierenden* Oberfläche vorgesehen sind.

9. Erzeugnis nach einem der Ansprüche 1 bis 7,
**dadurch gekennzeichnet, dass** die Druckfarbenschichten auf einem oder auf zwei *transparenten* Substrat(en) vorgesehen sind.

10. Erzeugnis nach einem der Ansprüche 1 bis 7,
**dadurch gekennzeichnet, dass**
die erste oder die zweite Druckfarbenschicht auf einem Substrat mit einer *lichtabsorbierenden* Oberfläche vorgesehen ist
und die andere der Druckfarbenschichten auf einem *transparenten* Substrat vorgesehen ist.

11. Erzeugnis nach einem der Ansprüche 1 bis 10,
**dadurch gekennzeichnet, dass** die Druckfarbenschichten UV-härtbar sind.

12. Verfahren zum Herstellen eines Erzeugnisses nach einem der Ansprüche 1 bis 11, wobei das Verfahren Folgendes umfasst:
den Schritt des Auftragens einer ersten und einer zweiten Druckfarbenzusammensetzung zur Bildung einer ersten und einer zweiten Druckfarbenschicht durch ein Druckverfahren, das vorzugsweise ausgewählt ist aus der Gruppe bestehend aus Siebdruck, Flexodruck, Heliogravur oder Druckfarbenstrahldruck, besonders bevorzugt durch Siebdruck, auf ein Substrat,
wobei eine der Druckfarbenzusammensetzungen linkszirkular polarisierende cholesterische Flüssigkristallpigmente mit einer ersten Farbe bei einem bestimmten Betrachtungswinkel umfasst und die andere Druckfarbenzusammensetzung rechtszirkular polarisierende cholesterische Flüssigkristallpigmente derselben Farbe oder einer anderen Farbe bei dem Betrachtungswinkel umfasst.

13. Verfahren zum Herstellen eines Erzeugnisses nach einem der Ansprüche 1 bis 11, wobei das Verfahren die folgenden Schritte umfasst:
a) Auftragen einer ersten und einer zweiten Druckfarbenzusammensetzung auf ein vorgemustertes Substrat durch ein Druckverfahren, das vorzugsweise ausgewählt ist aus der Gruppe bestehend aus Siebdruck, Flexodruck, Heliogravur oder Druckfarbenstrahldruck, besonders bevorzugt durch Siebdruck, zur Bildung einer ersten und einer zweiten Druckfarbenschicht,
wobei eine der Druckfarbenzusammensetzungen eine linkszirkular polarisierende cholesterische Flüssigkristallsubstanz umfasst, die eine erste Farbe bei einem bestimmten Betrachtungswinkel hat, und die andere Druckfarbenzusammensetzung eine rechtszirkular polarisierende cholesterische Flüssigkristallsubstanz derselben oder einer anderen Farbe bei dem Betrachtungswinkel umfasst;
b) Ausrichten der Schichten, die die cholesterischen Flüssigkristallsubstanzen umfassen, durch Wechselwirkung mit dem vorgemusterten Substrat; und
c) Härten der Schichten, die in Schritt a) und b) aufgetragen und ausgerichtet wurden.

14. Verfahren zum Herstellen eines Erzeugnisses, das ein grafisches Objekt darstellt, das bei Betrachtung mit einem geeigneten Betrachtungsgerät ein dreidimensionales Aussehen hat,
**gekennzeichnet durch** die folgenden Schritte
- Unterteilen des grafischen Objekts in getrennte Bausteine;
- Erzeugen einer ersten und einer zweiten stereoskopischen Projektion des unterteilten grafischen Objekts auf der Druckebene.

15. Verfahren nach einem der Ansprüche 12 bis 14,
**dadurch gekennzeichnet, dass** die erste Druckfarbenschicht vor dem Auftragen der zweiten Druckfarbenschicht, vorzugsweise durch UV-Härten gehärtet wird.

16. Authentifizierungssystem, umfassend ein Erzeugnis nach einem der Ansprüche 1 bis 15 und ein Betrachtungsgerät, vorzugsweise Brillen, die ein links- und rechtszirkular polarisierendes Filter für die zwei Linsen enthalten, wobei jede Linse ein Auge eines Betrachters bedeckt, der diese Brillen trägt.

17. Verwendung eines Erzeugnisses nach einem der Ansprüche 1 bis 11 für den Schutz vor Fälschungen einer Handelsware oder eines Sicherheitsdokuments, die bzw. das ausgewählt ist aus der Gruppe bestehend aus Banknoten, Wertpapieren oder -karten, Fahrtickets oder -karten, Steuerbanderolen und Produktetiketten.

## Revendications

1. Dispositif comprenant, sur un fond sous-jacent, des première et seconde couches d'encre qui représentent ensemble un objet graphique présentant, quand elle est observée avec un équipement de visualisation approprié, un aspect tridimensionnel,
dans laquelle l'une desdites couches d'encre montre une première couleur à un certain angle de visualisation et est un revêtement à polarisation circulaire gauche ou comprend un pigment à polarisation circulaire gauche,
et l'autre desdites couches d'encre montre la même couleur ou une autre couleur audit angle de visualisation et est un revêtement à polarisation circulaire droite ou comprend un pigment à polarisation circulaire droite,
lesdites première et seconde couches d'encre représentant une première et une seconde image d'une paire de projections stéréoscopiques dudit objet graphique, et
lesdites première et seconde couches d'encre étant superposées l'une sur l'autre, ou étant superposables l'une sur l'autre, ou étant imprimées l'une à côté de l'autre, **caractérisée en ce que**
ledit objet graphique est composé de blocs fonctionnels séparés, et
**en ce que**, dans chacune des projections stéréoscopiques, les blocs fonctionnels formant l'objet graphique sont représentés de façon à laisser *apparent* le fond sous-jacent desdites couches d'encre entre les blocs fonctionnels.

2. Dispositif selon la revendication 1,
**caractérisée en ce que** lesdits pigments de polarisation circulaire sont des pigments à cristaux liquides variables optiquement chiraux.

3. Dispositif selon la revendication 1,
**caractérisée en ce que** lesdits revêtements de polarisation circulaire sont des substances à cristaux liquides variables optiquement chiraux.

4. Dispositif selon l'une quelconque des revendications 1 à 3, **caractérisée en ce que** les projections stéréoscopiques de l'objet graphique comprennent uniquement les blocs fonctionnels qui appartiennent à la surface de l'objet graphique qui est vu par l'observateur depuis son angle de visualisation.

5. Dispositif selon l'une quelconque des revendications 1 à 4, **caractérisée en ce que** lesdits blocs fonctionnels sont des carrés, rectangles, polygones, cercles, points, disques, ellipsoïdes, lignes droites ou courbes, surfaces fermées délimitée par des lignes sinusoïdales, lettres, textes, logos, numéros ou images quelconques, lesdits blocs fonctionnels comprenant ou non des zones vides.

6. Dispositif selon l'une quelconque des revendications 1 à 5, **caractérisée en ce que** ledit objet graphique est composé de blocs fonctionnels identiques.

7. Dispositif selon l'une quelconque des revendications 1 à 5, **caractérisée en ce que** ledit objet graphique est composé de blocs fonctionnels différents.

8. Dispositif selon l'une quelconque des revendications 1 à 7, **caractérisée en ce que** lesdites couches d'encre sont fournies sur un substrat ayant une surface absorbant la lumière.

9. Dispositif selon l'une quelconque des revendications 1 à 7, **caractérisée en ce que** lesdites couches d'encre sont fournies sur un ou sur deux substrats *transparents.*

10. Dispositif selon l'une quelconque des revendications 1 à 7, **caractérisée en ce que**
l'une desdites première et seconde couches d'encre est fournies sur un substrat ayant une surface *absorbant* la lumière,
et l'autre desdites couches d'encre est fournie sur un substrat transparent.

11. Dispositif selon l'une quelconque des revendications 1 à 10,
**caractérisée en ce que** lesdites couches d'encre sont durcissables aux UV.

12. Procédé de préparation d'un dispositif selon l'une quelconque des revendications 1 à 11, ledit procédé comprenant :
l'étape d'application d'une première et d'une seconde composition d'encre afin de former une première et une seconde couche d'encre par un procédé d'impression, sélectionné de préférence dans le groupe consistant en sérigraphie, impression flexographique, impression héliographique ou impression à jet d'encre, idéalement par sérigraphie, sur un substrat
dans lequel l'une desdites compositions d'encre comprend des pigments à cristaux liquides cholestériques de polarisation circulaire gauche d'une première couleur à un certain angle de visualisation, et l'autre composition d'encre comprend des pigments à cristaux liquides cholestériques de polarisation circulaire droite de la même couleur ou d'une couleur différente audit angle de visualisation.

13. Procédé de préparation d'un dispositif selon l'une quelconque des revendications 1 à 11, ledit procédé comprenant les étapes suivantes
a) l'application d'une première et d'une seconde composition d'encre sur un substrat au motif préappliqué par un procédé d'impression, sélectionné de préférence dans le groupe consistant en sérigraphie, impression flexographique, impression héliographique ou impression à jet d'encre, idéalement par sérigraphie, afin de former une première et une seconde couche d'encre, dans lequel l'une desdites compositions d'encre comprend une substance à cristaux liquides cholestériques de polarisation circulaire gauche d'une première couleur à un certain angle de visualisation, et l'autre composition d'encre comprend une substance à cristaux liquides cholestériques de polarisation circulaire droite de la même couleur ou d'une couleur différente audit angle de visualisation ;
b) l'alignement desdites couches comprenant lesdites substances à cristaux liquides cholestériques par interaction avec le substrat au motif préappliqué ; et
c) le durcissement des couches appliquées et alignées aux étapes a) et b).

14. Procédé de production d'un dispositif représentant un objet graphique présentant, lorsqu'il est observé avec un équipement de visualisation approprié, un aspect tridimensionnel, **caractérisé par** les étapes suivantes
- subdivision dudit objet graphique en blocs fonctionnels séparés ;
- génération de première et seconde projections stéréoscopiques de l'objet graphique subdivisé sur le plan d'impression.

15. Procédé selon l'une quelconque des revendications 12 à 14, **caractérisé en ce que** la première couche d'encre est durcie avant l'application de la seconde couche d'encre, de préférence par durcissement aux UV.

16. Système d'authentification, comprenant un dispositif selon l'une quelconque des revendications 1 à 15 et un équipement de visualisation, de préférence des lunettes comprenant un filtre de polarisation circulaire gauche et droite pour les deux verres, chaque verre recouvrant l'oeil d'un observateur portant ces lunettes.

17. Utilisation d'un dispositif selon l'une quelconque des revendications 1 à 11 pour la protection contre la contrefaçon d'un produit commercial ou d'un document de sécurité sélectionné dans le groupe consistant en billets de banque, documents ou cartes de valeur, tickets ou cartes de transport, banderoles d'accises et étiquettes de produits.
